# DEMANDE DE BREVET EUROPEEN

(11) **EP 4 678 479 A1**
(43) Date de publication de la demande: **14.01.2026**
(21) Numéro de dépôt: 25182119.5
(22) Date de dépôt: 11.06.2025
(51) Int. Cl.: B60R 13/07, B62D 25/08

(54) **PARTIE STRUCTURELLE LATÉRALE AVANT D'UN VÉHICULE AUTOMOBILE, À POINTS DE MASSE PROTÉGÉS**

(30) Priorité: 12.07.2024 FR 2407641
(71) Demandeur: Stellantis Auto SAS, 78300 Poissy (FR)
(72) Inventeur: RIVIERRE, LAURENT, 75015 PARIS (FR); PODVIN, CHRISTOPHE, 78180 MONTIGNY LE BRETONNEUX (FR); LAPERRIERE, PATRICE, 92350 LE PLESSIS ROBINSON (FR)
(74) Mandataire: BCIP

(57) **Abrégé**

Une partie structurelle latérale avant (PSL) fait partie d'un véhicule automobile et comprend une pièce de support de suspension (PSS) comportant une partie supérieure (PS) prolongée vers le bas par des première partie transversale avant (PT1) et première partie longitudinale interne (PLI1) devant lesquelles sont placées des seconde partie transversale avant (PT2) et seconde partie longitudinale interne (PLI2) d'un passage de roue (PR). La seconde partie transversale avant (PT2) comprend un bord supérieur (BS) s'étendant vers le haut, au-dessus d'une extrémité supérieure (ES) de la première partie transversale avant (PT1), pour définir avec cette dernière un canal (CL) permettant l'écoulement de liquide provenant de la partie supérieure (PS). La première partie transversale avant (PT1) comprend au moins une rainure (RE) s'étendant vers le bas et communiquant avec le canal (CL) pour permettre l'évacuation de liquide provenant de la partie supérieure (PS) et/ou s'écoulant dans le canal (CL).

## Description

### Domaine technique de l'invention

L'invention concerne les véhicules automobiles comprenant des parties structurelles latérales avant, droite et gauche, comprenant respectivement des pièces de support de suspension droite et gauche.

### Etat de la technique

Certains véhicules automobiles comprennent une structure comportant des parties structurelles latérales avant, droite et gauche, qui comportent chacune :
- une pièce de support de suspension comprenant une partie supérieure prolongée vers le bas par des première partie transversale avant et première partie longitudinale interne, et
- un passage de roue (avant) comprenant des seconde partie transversale avant et seconde partie longitudinale interne placées respectivement devant les première partie transversale avant et première partie longitudinale interne.

Généralement, dans les véhicules tels que ceux décrits ci-avant, une grille d'auvent est installée suivant la direction transversale entre les, et au-dessus des, pièces de support de suspension droite et gauche, avec interposition d'un collecteur d'auvent. Ainsi, les écoulements de liquide issus du pare-brise sont récupérés et canalisés par le collecteur d'auvent, ce qui permet d'empêcher ces écoulements d'atteindre les pièces de support de suspension, et donc d'atteindre les points de (mise à la) masse qui sont situés devant les secondes parties transversales avant des passages de roue.

Cependant, dans certains véhicules très récents il n'y a pas de collecteur d'auvent intercalé entre la grille d'auvent et les pièces de support de suspension, et donc les écoulements de liquide issus du pare-brise peuvent rejoindre les points de (mise à la) masse, ce qui peut entraîner leur oxydation et/ou s'avérer dangereux pour le véhicule et ses passagers.

L'invention a donc notamment pour but d'améliorer la situation.

### Présentation de l'invention

Elle propose notamment à cet effet une partie structurelle latérale avant destinée à faire partie d'un véhicule automobile et comprenant une pièce de support de suspension comportant une partie supérieure prolongée vers le bas par des première partie transversale avant et première partie longitudinale interne devant lesquelles sont placées respectivement des seconde partie transversale avant et seconde partie longitudinale interne d'un passage de roue (avant).

Cette partie structurelle latérale avant se caractérise par le fait :
- que la seconde partie transversale avant comprend un bord supérieur s'étendant vers le haut, au-dessus d'une extrémité supérieure de la première partie transversale avant, afin de définir avec cette dernière un canal propre à permettre un écoulement de liquide provenant de la partie supérieure, et
- que la première partie transversale avant comprend au moins une rainure s'étendant vers le bas et communiquant avec le canal afin de permettre une évacuation de liquide provenant de la partie supérieure et/ou s'écoulant dans le canal.

Grâce à l'invention, le liquide s'écoulant sur la partie supérieure de la pièce de support de suspension rejoint la rainure qui l'évacue vers le bas et/ou le canal qui l'évacue dans la rainure, ce qui l'empêche d'atteindre les points de (mise à la) masse situés devant la seconde partie transversale avant du passage de roue et donc évite leur oxydation et/ou de déclencher un problème électrique dans le véhicule.

La partie structurelle latérale avant selon l'invention peut comporter d'autres caractéristiques qui peuvent être prises séparément ou en combinaison, et notamment :
- la rainure peut s'étendre vers le bas sur toute une hauteur de la première partie transversale avant ;
- la rainure peut s'étendre vers le bas suivant une direction qui est destinée à être sensiblement verticale ;
- la rainure peut être réalisée par emboutissage ;
- le bord supérieur peut s'étendre vers le haut, au-dessus de l'extrémité supérieure de la première partie transversale avant, sur une hauteur qui est comprise entre 1 mm et 3 mm ;
- la partie supérieure peut être prolongée vers le bas par une partie longitudinale externe devant laquelle est placée une doublure d'aile avant et définissant avec la première partie transversale avant qu'elle prolonge une zone arrondie espacée des doublure d'aile avant et seconde partie transversale avant afin de définir avec ces dernières un trou qui est propre à évacuer du liquide provenant de la partie supérieure.

L'invention propose également un véhicule automobile comprenant deux parties structurelles latérales avant, droite et gauche, du type de celle présentée ci-avant, et des suspensions avant, droite et gauche, solidarisées fixement et respectivement aux pièces de support de suspension, droite et gauche.

Par exemple, le véhicule automobile peut comprendre une grille d'auvent installée suivant une direction transversale entre les, et au-dessus des, pièces de support de suspension droite et gauche.

### Brève description des figures

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »)), sur lesquels :
[Fig. 1] illustre schématiquement, dans une vue en perspective du côté avant, une partie d'un exemple de partie structurelle latérale avant droite selon l'invention, destinée à faire partie d'un exemple de véhicule automobile,
[Fig. 2] illustre schématiquement, dans une autre vue en perspective du côté latéral droit, une partie de la partie structurelle latérale avant droite de la figure 1,
[Fig. 3] illustre schématiquement, dans une vue en coupe dans un plan longitudinal et vertical au niveau de la pièce de support de suspension, une partie de la partie structurelle latérale avant droite de la figure 1,
[Fig. 4] illustre schématiquement, dans une vue du dessus, une partie de la partie structurelle latérale avant droite de la figure 1, et
[Fig. 5] illustre schématiquement, dans une vue en perspective, la pièce de support de suspension (droite) de la partie structurelle latérale avant droite de la figure 1.

### Description détaillée de l'invention

L'invention a notamment pour but de proposer une partie structurelle latérale avant PSL destinée à faire partie d'un véhicule automobile, et permettant de protéger contre des écoulements d'eau issus d'une grille d'auvent GA des points de (mise à la) masse.

Dans ce qui suit, on considère, à titre d'exemple non limitatif, que le véhicule automobile est une voiture. Mais l'invention n'est pas limitée à ce type de véhicule automobile. Elle concerne en effet tout véhicule automobile comprenant une structure comportant des parties structurelles latérales avant droite et gauche comprenant respectivement des pièces de support de suspension droite et gauche.

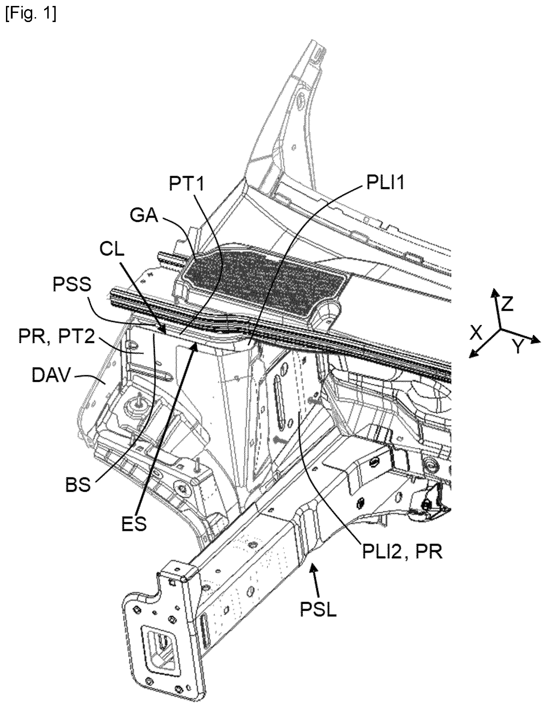

Sur les figures 1 à 5 la direction X est destinée à être parallèle à la direction longitudinale du véhicule (automobile), laquelle est sensiblement parallèle aux côtés latéraux (ou longitudinaux) comportant les portes latérales, la direction Y est destinée à être parallèle à la direction transversale du véhicule, laquelle est perpendiculaire à la direction longitudinale X, et la direction Z est destinée à être parallèle à la direction verticale du véhicule, laquelle est perpendiculaire aux directions longitudinale X et transversale Y.

Dans ce qui précède et ce qui suit les notions « d'avant » et « d'arrière » sont définies par rapport à l'extrémité avant du véhicule. Par conséquent, la partie avant d'un élément est située plus près de l'extrémité avant du véhicule que la partie arrière de ce même élément.

Par ailleurs, dans ce qui précède et ce qui suit les notions « d'inférieur » et « de supérieur » sont définies par rapport au plancher du véhicule. Par conséquent, un élément supérieur est situé au-dessus d'un élément inférieur.

En outre, dans ce qui précède et ce qui suit un élément est dit transversal lorsqu'il s'étend suivant une direction principale qui est destinée à être sensiblement parallèle à la direction transversale Y du véhicule, et un élément est dit longitudinal lorsqu'il s'étend suivant une direction principale qui est destinée à être sensiblement parallèle à la direction longitudinale X du véhicule.

On a schématiquement illustré sur la figure 1 une partie d'un exemple de partie structurelle latérale avant PSL (ici droite), selon l'invention, destinée à faire partie d'un véhicule (automobile). On notera qu'un véhicule (automobile) comprend des parties structurelles latérales avant PSL, droite et gauche, auxquelles sont solidarisées fixement et respectivement des suspensions avant droite et gauche.

Comme illustré au moins partiellement sur les figures 1 à 4, une partie structurelle latérale avant PSL, selon l'invention, comprend au moins, et notamment, une pièce de support de suspension PSS et un passage de roue PR.

Une grille d'auvent GA est installée suivant la direction transversale Y entre les, et au-dessus des, pièces de support de suspension PSS droite et gauche, sans interposition d'un collecteur d'auvent.

Comme illustré au moins partiellement sur les figures 1 à 5, la (chaque) pièce de support de suspension PSS comprend une partie supérieure PS qui est prolongée vers le bas (suivant la direction verticale Z) par une première partie transversale avant PT1, une première partie longitudinale interne PLI1 et une partie longitudinale externe PLE, notamment. La suspension est habituellement solidarisée fixement à la partie supérieure PS par vissage.

Comme illustré au moins partiellement sur les figures 1 à 4, le (chaque) passage de roue PR comprend une seconde partie transversale avant PT2 et une seconde partie longitudinale interne PLI2 qui sont respectivement installées devant les première partie transversale avant PT1 et première partie longitudinale interne PLI1.

Comme illustré au moins partiellement sur les figures 1 à 4, cette seconde partie transversale avant PT2 comprend un bord supérieur BS qui s'étend vers le haut, au-dessus de l'extrémité supérieure ES de la première partie transversale avant PT1 de la (chaque) pièce de support de suspension PSS, afin de définir avec cette première partie transversale avant PT1 un canal CL qui est propre à permettre l'écoulement de liquide provenant de la partie supérieure PS de la pièce de support de suspension PSS, et issu d'au moins la grille d'auvent GA du fait de l'absence de collecteur d'auvent.

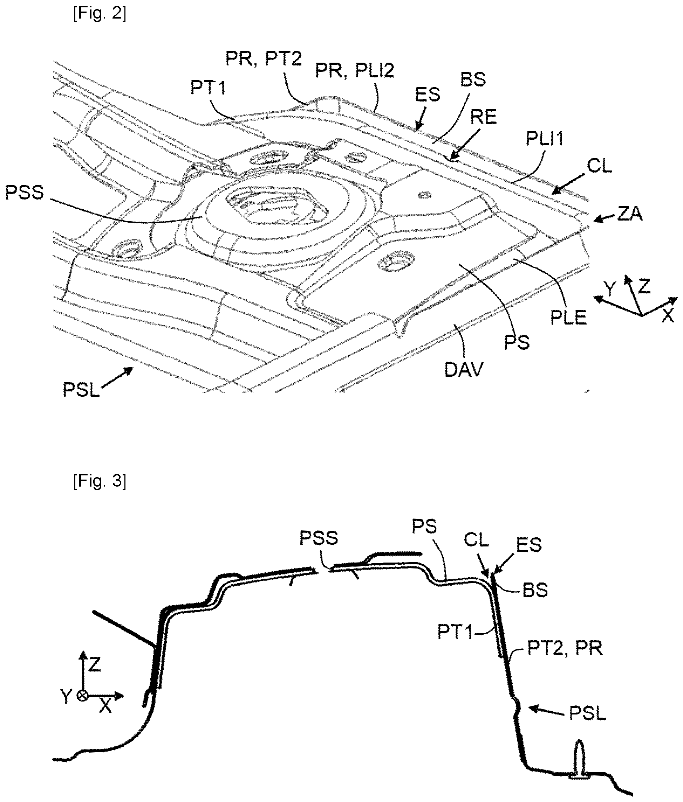

De plus, et comme illustré au moins partiellement sur les figures 2, 4 et 5, la première partie transversale avant PT1 de la (chaque) pièce de support de suspension PSS comprend au moins une rainure RE qui s'étend vers le bas (éventuellement suivant la direction verticale Z) et communique avec le canal (CL), afin de permettre l'évacuation de liquide provenant de la partie supérieure PS de la pièce de support de suspension PSS et/ou s'écoulant dans le canal CL.

On comprendra en effet que le liquide qui s'écoule sur une zone avant de la partie supérieure PS de la pièce de support de suspension PSS rejoint directement la (une) rainure RE qui l'évacue vers le bas et/ou le canal CL dans lequel il s'écoule jusqu'à ce qu'il atteigne la (une) rainure RE qui l'évacue vers le bas. Ainsi, les écoulements de liquide issus d'au moins la grille d'auvent GA et parvenant sur une pièce de support de suspension PSS ne peuvent pas passer la seconde partie transversale avant PT2 du passage de roue PR et donc ne peuvent pas atteindre les points de (mise à la) masse qui sont situés devant (ou en amont de) cette seconde partie transversale avant PT2, ce qui évite leur oxydation et/ou de provoquer un problème électrique potentiellement grave dans le véhicule.

On notera que dans l'exemple illustré sur les figures 2, 4 et 5, la pièce de support de suspension PSS ne comprend qu'une unique rainure RE sur sa première partie transversale PT1. Mais elle pourrait comprendre plusieurs (au moins deux) rainures RE sur sa première partie transversale PT1.

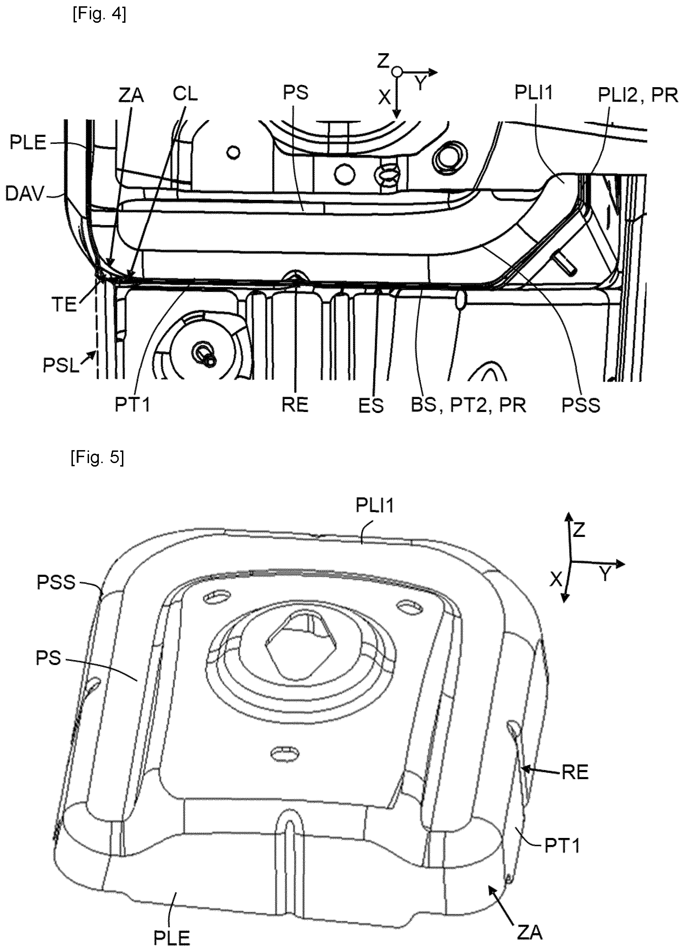

Par exemple, et comme illustré non limitativement et au moins partiellement sur la figure 5, la (chaque) rainure RE peut s'étendre vers le bas sur toute la hauteur de la première partie transversale avant PT1 de la pièce de support de suspension PSS. Cela permet de faciliter l'évacuation des écoulements de liquide par gravité.

Egalement par exemple, et comme illustré non limitativement et au moins partiellement sur la figure 5, la (chaque) rainure RE peut s'étendre vers le bas suivant une direction qui est destinée à être sensiblement verticale (sensiblement parallèle à la direction verticale Z). Cela permet d'optimiser la vitesse d'évacuation des écoulements de liquide par gravité. Mais dans une variante de réalisation non illustrée, la (chaque) rainure RE pourrait s'étendre vers le bas suivant une direction qui est destinée à être inclinée par rapport à la direction verticale Z.

On notera que la (chaque) rainure RE peut être réalisée par emboutissage, en particulier lorsque la pièce de support de suspension PSS est définie dans une tôle, par exemple en acier. Mais, lorsque la pièce de support de suspension PSS est définie par moulage dans une matière plastique ou synthétique ou encore composite très rigide et très résistante, la (chaque) rainure RE peut être réalisée lors du moulage.

Egalement par exemple, et comme illustré non limitativement et au moins partiellement sur les figures 2 et 3, le bord supérieur BS de la seconde partie transversale avant PT2 du passage de roue PR peut s'étendre vers le haut (suivant la direction verticale Z), au-dessus de l'extrémité supérieure ES de la première partie transversale avant PT1 de la pièce de support de suspension PSS, sur une hauteur qui est comprise entre 1 mm et 5 mm.

A titre d'exemple illustratif, cette extension vers le haut au-dessus de l'extrémité supérieure ES peut être égale à 2 mm. Cette option permet d'empêcher qu'un écoulement de liquide important (provoquant un remplissage complet du canal CL) déborde au-dessus du bord supérieur BS.

On notera également, comme illustré non limitativement sur les figures 2, 4 et 5, que la partie supérieure PS de la (chaque) pièce de support de suspension PSS peut être prolongée vers le bas (suivant la direction verticale Z) par une partie longitudinale externe PLE devant laquelle est placée la doublure d'aile avant DAV et qui définit avec la première partie transversale avant PT1 qu'elle prolonge une zone arrondie ZA espacée de la doublure d'aile avant DAV et de la seconde partie transversale avant PT2 du passage de roue PR.

Dans ce cas, comme illustré non limitativement sur la figure 4, la partie longitudinale externe PLE, la doublure d'aile avant DAV et la seconde partie transversale avant PT2 peuvent définir ensemble un trou TE qui est propre à évacuer du liquide provenant de la partie supérieure PS et n'ayant pas encore atteint le canal CL. Cette option permet avantageusement d'augmenter la quantité de liquide, issu de la partie supérieure PS de la (chaque) pièce de support de suspension PSS, qui est évacuée vers le bas par gravité.

## Revendications

1. Partie structurelle latérale avant (PSL) destinée à faire partie d'un véhicule automobile et comprenant une pièce de support de suspension (PSS) comportant une partie supérieure (PS) prolongée vers le bas par des première partie transversale avant (PT1) et première partie longitudinale interne (PLI1) devant lesquelles sont placées respectivement des seconde partie transversale avant (PT2) et seconde partie longitudinale interne (PLI2) d'un passage de roue (PR), **caractérisée en ce que** ladite seconde partie transversale avant (PT2) comprend un bord supérieur (BS) s'étendant vers le haut, au-dessus d'une extrémité supérieure (ES) de ladite première partie transversale avant (PT1), afin de définir avec cette dernière (PT1) un canal (CL) propre à permettre un écoulement de liquide provenant de ladite partie supérieure (PS), et **en ce que** ladite première partie transversale avant (PT1) comprend au moins une rainure (RE) s'étendant vers le bas et communiquant avec ledit canal (CL) afin de permettre une évacuation de liquide provenant de ladite partie supérieure (PS) et/ou s'écoulant dans ledit canal (CL).

2. Partie structurelle latérale avant selon la revendication 1, **caractérisée en ce que** ladite rainure (RE) s'étend vers le bas sur toute une hauteur de ladite première partie transversale avant (PT1).

3. Partie structurelle latérale avant selon la revendication 1 ou 2, **caractérisée en ce que** ladite rainure (RE) s'étend vers le bas suivant une direction destinée à être sensiblement verticale.

4. Partie structurelle latérale avant selon l'une des revendications 1 à 3, **caractérisée en ce que** ladite rainure (RE) est réalisée par emboutissage.

5. Partie structurelle latérale avant selon l'une des revendications 1 à 4, **caractérisée en ce que** ledit bord supérieur (BS) s'étend vers le haut, au-dessus de ladite extrémité supérieure (ES) de la première partie transversale avant (PT1), sur une hauteur comprise entre 1 mm et 3 mm.

6. Partie structurelle latérale avant selon l'une des revendications 1 à 5, **caractérisée en ce que** ladite partie supérieure (PS) est prolongée vers le bas par une partie longitudinale externe (PLE) devant laquelle est placée une doublure d'aile avant (DAV) et définissant avec ladite première partie transversale avant (PT1) qu'elle prolonge une zone arrondie (ZA) espacée desdites doublure d'aile avant (DAV) et seconde partie transversale avant (PT2) afin de définir avec ces dernières (DAV, PT2) un trou (TE) propre à évacuer du liquide provenant de ladite partie supérieure (PS).

7. Véhicule automobile, **caractérisé en ce qu'**il comprend des parties structurelles latérales avant (PSL), droite et gauche, selon l'une des revendications 1 à 6, et des suspensions avant, droite et gauche, solidarisées fixement et respectivement aux pièces de support de suspension (PSS), droite et gauche.

8. Véhicule automobile selon la revendication 7, **caractérisé en ce qu'**il comprend une grille d'auvent (GA) installée suivant une direction transversale entre lesdites, et au-dessus desdites, pièces de support de suspension (PSS) droite et gauche.
